# EUROPEAN PATENT SPECIFICATION

(11) **EP 0 708 682 B1**
(45) Date of publication and mention of the grant of the patent: **19.11.1997**
(21) Application number: 94923118.7
(22) Date of filing: 16.06.1994
(51) Int. Cl.: B01J 3/00, B01J 3/04, B01J 19/08

(54) **A METHOD AND A DEVICE FOR TREATING MATERIALS**
VERFAHREN UND VORRICHTUNG ZUM BEHANDELN VON MATERIALIEN
PROCEDE ET DISPOSITIF DE TRAITEMENT DE MATERIAUX

(43) Date of publication of application: 01.05.1996
(73) Proprietor: Karlsson, Kjell, S-263 91 Höganäs (SE); Karlsson, Stig, S-260 41 Nyhamnsläge (SE)
(72) Inventor: Karlsson, Kjell, S-263 91 Höganäs (SE); Karlsson, Stig, S-260 41 Nyhamnsläge (SE)
(74) Representative: Petri, Stellan
(86) International application number: SE9400592
(87) International publication number: WO9502449

(56) References cited:
- EP-A- 0 120 271
- US-A- 4 892 294
- US-A- 5 077 009

## Description

### Technical Field

The present invention relates to a method of treating materials, such as mineral, metallic and biological materials, for carrying out for example moisture migration, polymerization, neutralizing, recalcinating, impregnating, pigmentation, preservation, reinforcement, cleaning, ionization, sanitation, leaching or soaking. It also relates to a device for carrying out this method.

### Background of the Invention

Concurrently with the expansion of our society and the population concentration to larger population centers our environment is exposed to larger and larger influences of chemicals and other emissions. With increasing vehicle traffic and a global increase of industrial activity the emissions increase. Our air or atmosphere becomes increasingly aggressive, which also applies to our water.

A result in the form of an increasingly accelerated breaking down and disintegration appears today clearly on buildings and objects of cultural value. Even newly produced objects are immediately attacked, in the first stage manifested as a marked dirtiness and later also a surface breakdown.

In order to protect and restore attacked surfaces on buildings and objects two methods are today mainly used, namely on one hand brushing and on the other hand flushing the visible surfaces of the objects with chemicals and/or water.

The limitations are apparant, as the penetration of the used agents only occurs to a depth of some millimeters and as the most attacked, deep layers are not influenced at all. The result is that the material is only protected on its surface during a limited time. When the lower laying aggressive materials are leached out, the breaking down is reassumed.

In many cases the use of these methods can even be detrimental, as the aggressive substances can be trapped behind a protecting surface of chemicals.

The limitations in the penetration ability of the used chemicals lie of course in that they flow off at brushing as well as at flushing and are not given the time required for penetration into pores and cracks. It is obvious that the chemicals can not be transported upwards in the object, if this is not dismounted and immersed in the actual chemical.

At object cleaning with the use of high pressure the main effect is that dirt and aggressive substanses are pressed into the surface of the object and are later leached out at rainfalls. Such a method supposedly is more detrimental than advantageous.

The main object of the present invention is thus to accomplish a method and a device for attaining a more deep-going treatment of buildings and objects than has earlier been possible. As will appear below, the object is however substantially wider, and a broad variety of different materials and objects can be exposed to many different treatments according to the inventive method.

US-A-5 077 009, which is regarded as the closest prior art, relates to a method for preservation of organic materials, which are subjected to pressure cycling combined with a cyclically varying process temperature.

### The Invention

For accomplishing a treatment, which without difficulty can be varied from a surface treatment to a very deep-reaching treatment, of materials the method according to the invention is characterized in that the material is exposed - at a temperature at or over the temperature of the surroundings - to a cyclically variating pressure, the maximum pressure of which is at or closely below the atmospheric pressure and the minumum pressure of which is down to about 200 mbar or lower. The method is further characterized in that a treatment medium suitable for the treatment is added, at the same time as the material is exposed to the cyclically variating pressure.

Depending on the desired result the variating pressure can vary within broad limits, but in practice it is as stated possible to use a pressure of down to at least 200 mbar, which is the practical negative pressure which can be attained in reasonable time by means of commercially available devices. The maximum pressure during the cycling is normally at or near the atmospheric pressure, but under certain circumstances it is also possible to create a cyclic overpressure.

The material can if needed be exposed to infrared light, ultraviolet light, microwaves or the like concurrently with the cyclic pressure.

The invention also relates to a device for carrying out the above mentioned method of treating materials with a cyclic, pressure. This device has an enclosure for enclosing or covering an object or part of an object which is to be treated, means for sealingly delimit the cover from the surroundings, so that it is possible to create a pressure within the cover different from the pressure outside thereof, and means for creating a cyclic pressure inside the cover.

An object which shall be treated can accordingly be completely enclosed in a container, in which the cyclic pressure is created, but in a preferred embodiment use is made of a device for treating one certain surface of the object at a time. A device for carrying out such a treatment has an enclosed frame for contacting the part of the object which shall be treated and a cloth or the like, which is attached to the frame and covers the area within the same, the frame being designed to stick to the object by means of a continuous subatmospheric presure and the cloth being provided with connections for the cyclic pressure and for suitable treatment media.

If required, the device can be equipped with means for exposing a working surface inside the frame to infrared light, ultraviolet light, microwaves or the like.

A total arrangement for carrying out a treatment according to the invention can include a pump for creating a continuous subatmospheric pressure in a storage tank therefore connected to the frame, a cycling tank connected to the storage tank and to the cloth, treatment media tanks connected to the cloth and an electronic system for surveying and controlling the pressure and supply of treatment medium and so on.

### Brief Description of the Drawings

The invention shall he described in further detail below reference being made to the accompanying drawings, in which
Fig 1 is a plan view of a device according to the invention,
Fig 2 is a sectional view of the device along the line II-II in Fig 1,
Fig 3 is a section to a larger scale of a frame for the device according to Fig 1,
Fig 4 is a graph illustrating the cyclic negative pressure according to the invention,
Fig 5 schematically shows a total arrangement for carrying out the method according to the invention and
Fig 6 shows an example of a practical embodiment of the method according to the invention.

### Description of Embodiments

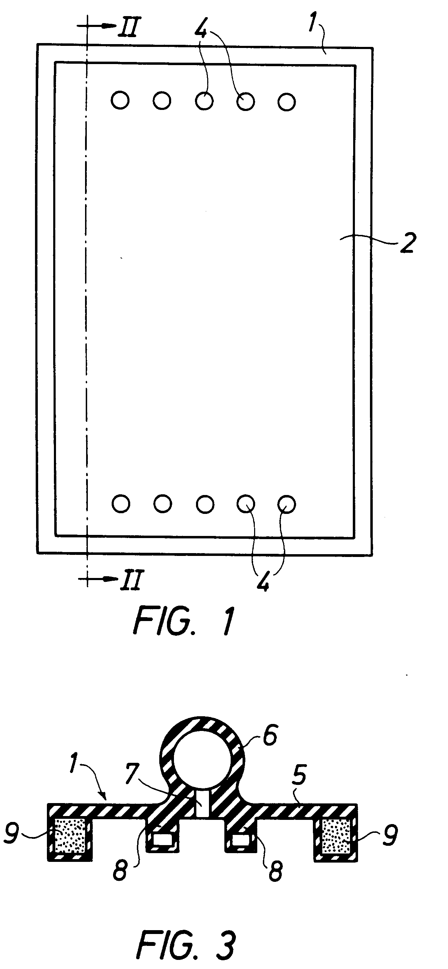

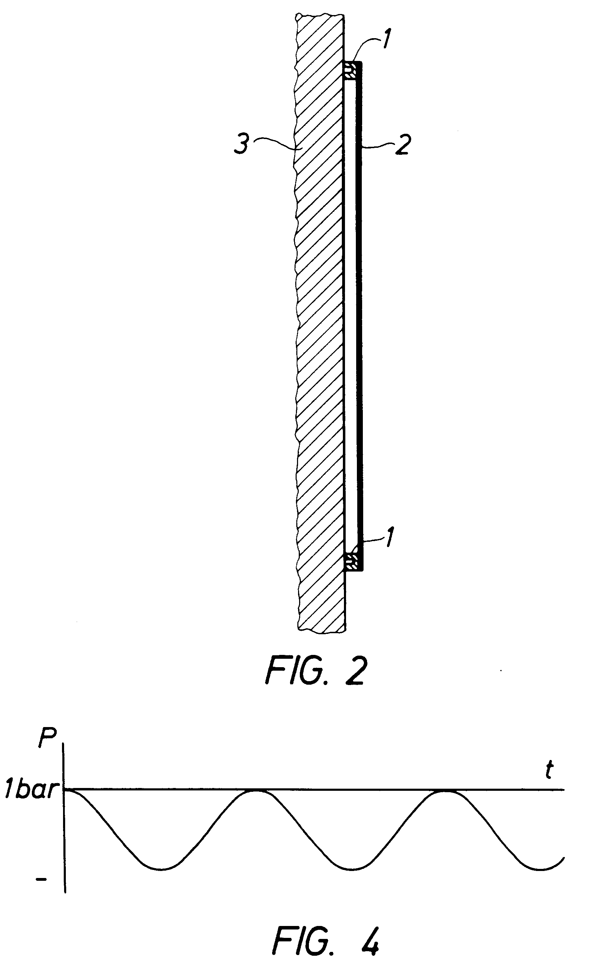

An enclosed frame 1 is shown in Figs 1 and 2. A cloth 2, which covers the entire surface within the frame 1, is attached thereto. A practical example of a frame 1 will be described below under reference to Fig 2. The device 1, 2 is intended for application on an object 3 which shall be treated. If the object is planar, the frame 1 can also be planar, whereas other forms of the object 3 can motivate other forms for the frame 1.

The purpose of the frame 1 is to attach the device by means of a subatmospheric pressure, which below somewhat improperly is called a negative pressure, to the object 3 which shall be treated. This negative pressure shall accordingly be continuous.

The space under the cloth 2 shall be exposed to a cyclic negative pressure. The cyclic negative pressure is created in a vay to be described, and the cloth 2 can be provided with a number of connections 4 for the cyclic negative pressure as well as for treatment media described below. The working surface of the cloth 3 can be smooth, grooved, knotty and so on, depending on process, substrate and other factors. The cloth can be transparent or not. The cloth 2 shall be resistant against the treatment medium used, acid-resistant, solvent-resistant and so on. It shall tolerate overpressure as well as underpressure or negative pressure. A layer of foam rubber may be arranged under the cloth for protecting the underlying material.

The size of the frame 1 can vary within wide limits. It may for example have a size of 25 x 40 cm, but it might quite as well be for example ten times bigger, depending on the object to be treated, treatment medium, the magnitude of the negative pressure and so on. The connections 4 can be factory mounted or site mounted by means of a non-destroying system. The connections which are not used for supply of cyclic negative pressure or treatment medium shall be closed.

The purpose of the frame 1 is to keep the device in place on the object 3 which shall be treated. This is obtained by means of a continuous negative pressure. An example of a practical embodiment of a frame 1 is shown in Fig 3. The frame can be manufactured of hard EPDM rubber. A tube 6 for negative pressure is arranged on a strip 5. The tube 6 is connected to the space under the strip 5 by means of channels 7. The strip 5 is at its underside provided with longitudinal beads 8 on either side of the channels 7. In the space between the beads 8 a negative pressure will be created at use keeping the frame 1 attached to the object which shall be treated. Further, longitudinal sealing beads 9 are arranged under the edges of the strip 5. These sealing beads 9 can be manufactured of EPDM expanded rubber.

It shall be noticed that the frame shown in Fig 3 only is a non-limiting example of construction. In the same manner as the cloth 2 the frame 1 can underneath be knotty or grooved depending on surface and be provided with foam rubber for protecting the substrate.

Fig 4 schematically shows how the pressure P can vary cyclically over the time t. For the sake of simplicity the pressure curve is shown as a sine curve in Fig 4 but many other curve forms are feasible, depending on the circumstances in the actual case. For example, it may in many cases be suitable to have a longer phase with negative pressure, i e the first, third, fifth and further phase in Fig 4, than the pressure phase, i e the second, fourth and further phase in Fig 4. The magnitude of the negative pressure can vary depending on the circumstances. For practical reasons it is probably difficult to attain a lower pressure than about 200 mbar, but this is by no means a lower limit; with other equipment it can in certain cases be of advantage if even lower pressures can be used. It may even be appropriate to use the expression "vacuum" rather than "negative pressure".

The maximum pressure during the cycling is in Fig 4 given as 1 bar, i e atmospheric pressure, which may be regarded as normal. The maximum pressure can, however, in certain cases be lower than atmospheric and in other cases over atmospheric. An example of a case where an overpressure can be advantageous is at the renovation of a plastered surface, where the plaster partially has got loose from the substrate.

Practical tests made so far have shown that the cycle length probably is minimum 5 seconds and maximum 1 - 2 minutes, but this is a non-limiting example of times.

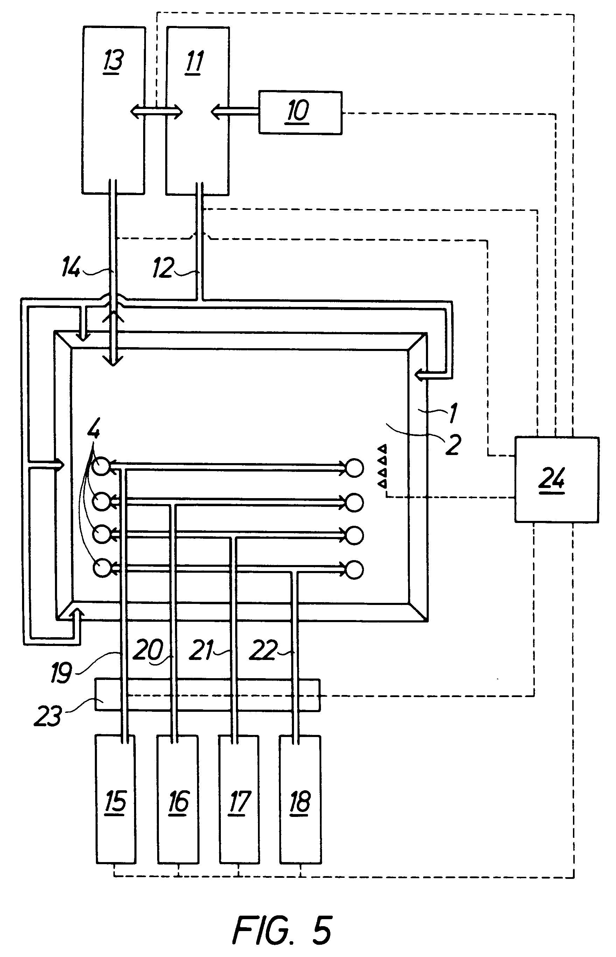

Fig 5 shows an example of a practical arrangement for accomplishing cyclic negative pressure in a device 1, 2 and for supplying treatment media to this device. A pump 10 for accomplishing negative pressure or vacuum is intended to create a continuous negative pressure in a storage tank 11, which by means of lines 12 is connected to the frame 1. A cycling tank 13 is connected to the storage tank 11 and is coupled to the device by means of a line 14. The cycling tank 13 has means for accomplishing the desired pressure variation.

A number of treatment media tanks 15 - 18 are connected to the cloth connections 4 by means of lines 19 - 22. On its way to and/or from the tanks 15 - 18 the treatment media can be forced to pass through a filter 23. A computer 24 with associated system shown with dashed lines has the purpose of controlling and surveying the treatment.

It has already been stated that the invention is applicable to a number of different treatments of many different types of material. Special importance has been placed on treatment of buildings and art objects, but many other applications are possible as will appear below. The following treatments can be regarded as examples.

Moisture migration, i e to get rid of moisture on or in different materials or objects, can be accomplished in that the object is exposed to cyclic negative pressure, possibly in combination with gasifying equipment, such as IR (infrared light), ultrasound, microwaves and so forth. The moisture can be condensated in a special condensor.

Polymerization, i e supply of polymeric material on or in different objects, can be accomplished by means of the cyclic negative pressure, the polymeric material being brought to polymerization either by moisture migration as above or by special materials, such as accelerators or catalysts, or hardening initiating by means of ultraviolet light, ultrasound, microwaves, infrared light and so on.

By use of the technique with cyclic negative pressure it is possible to add fungicides or mycelium killing material and remove the killed mycelia by means of for example washing. In conjunction with this treatment it is also possible to impregnate or preserve and moisture migrate.

It is possible to add chemical material for preventing water intrusion by means of the cyclical negative pressure.

By means of a device as described above, provided with anods and/or anod screens, and utilizing the cyclic negative pressure it is possible to add metallic material to statues, boat hulls and so on.

It is possible to accomplish recalcination by means of the cyclic negative pressure. Recalcination means addition of or creation of new lime bindings in broken down material. At the same time it is possible to correct the pH-value of the material. Recalcination can be regarded as a typical application of the invention.

It is possible to impregnate an object, i e to add chemical or metallic material, by means of cyclic negative pressure. By pigmentation is meant addition of polymeric or other pigments to different materials. Pigmentation can also be brought about in other ways, for example by treatment with acid material. Pigmentation can be accomplished by means of cyclic negative pressure.

Likewise it is possible to accomplish preservation, i e addition of chemical or other substanses giving a preserving/protecting effect.

By means of negative pressure it is possible to reinforce objects, i e to add polymeric or other materials which are added in the surface or deeper in the object, so that the object is reinforced by means of a chemical reaction or otherwise.

The cyclic negative pressure can advantageously be used in order to remove the smell after a fire or differently speaking to sanitize from smoke in walls, furniture and clothes, ozone, i e trivalent oxygen, being used as treatment gas.

The method according to the invention with cyclic negative pressure is generally speaking well apted for sanitation.

By means of cyclic negative pressure it is also possible to leach out for example aggressive material from objects. It is also possible to remove pigments in this way. Also other treatments such as acidifying can be accomplished by means of cyclic negative pressure.

The different treatments referred to above can be carried out individually or in combination with each other.

The theoretical background to the good results obtained by treatment with cyclic negative pressure is not yet fully explained. During each phase with negative pressure the fluid or treatment medium is forced further into the object, whereas a recovery occurs in the intermediate phase up to or even above the atmospheric pressure. The deeper the treatment medium shall intrude, the greater the number of cycles shall in principle be used. In order to understand the invention it is possible to draw a parallel with a bath sponge: by compressing the sponge - corresponding to the negative pressure - the content in the sponge is removed, and the sponge can thereafter during the recovery phase attract other material from the surroundings. The result will be improved with an increasing number of cycles.

The following working example is illustrative for how the method can be used at cleaning a mineral surface of a building. A device according to Fig 1 and 2 is mounted against the substrate. Continuous negative pressure is supplied to the frame, so that the cloth is fixed against the wall. The working surface is exposed to negative pressure.

Valves for cleaning agent and water are opened, so that cleaning agent is mixed with water and is sucked up to the working surface. When the working surface is completely covered with the mixture, the cycles are commenced.

The cycles are defined by the time for the treatment, the time between the treatments, the magniture of the negative pressure and the amount of air removed in litres per minute. Depending on the different chosen factors the cleaning fluid is brought in to a predetermined depth and is allowed to act during a predetermined time, controlled by a computer program.

After finished treatment the cleaning fluid is pumped back to a tank via a filter. The water valve is opened, and water is sucked up to the working surface. Soaking by cycling with negative pressure occurs during a certain number of minutes. Water circulates under negative pressure along the surface of the wall from the top downwards. The water is brought to a filter and a tank.

When the process has been terminated the device is dismounted and is moved to a new working surface, an overlap of say 10 centimetres being provided.

Certain practical tests with four different equipments have been made.

In a vacuum tank of steel with a volume of about 25 litres vegetable and mineral material was exposed to cyclic negative pressure with immigration of different fluids, such as preservation agent, pigmentation agent and so forth.

At tests with only constant negative pressure no apparant effect regarding penetration of the fluids was obtained. At cyclic negative pressure down to about 700 - 800 mbar on the other hand a forceful penetration in the vegetables was obtained. The cycles were repeated in series with negative pressure during 30 seconds and a phase up to atmospheric pressure during 30 seconds. Continued tests with supply of on one hand killing agents, on the other hand cell opening agents for even faster penetration are planned. Also supply of polymeric material for fixation is planned. Such a treatment can for example be used for preservation of wedding bouquets and the like.

In a vacuum bell (spherically shaped glass bell) with a volume of 20 litres the following test was performed: a container with the volume 1 litre half filled with coloured fluid was put into the bell. Different materials, such as concrete K 200, concrete K 450, Travertin, bricks and sand stone, were immersed in the container. The test objects had the following dimensions: width 70 mm, thickness 50 mm and height 200 mm. The test objects were placed on their ends, so that about 1/4 was immersed in the fluid.

The bell was exposed to a constant negative pressure, but no measurable reaction was obtained on any of the test objects.

At the use of cyclic negative pressure in series of 20 seconds with intervals of 5 seconds with a negative pressure of about 700 - 800 mbar it appeared already after a few cycles that the fluid crept up into the test objects. Already after some 20 cycles the fluid covered the top ends of the test objects, the climbing height of the fluid thus being about 150 mm. After sawing the test objects to pieces it was obvious that the fluid had penetrated all pores and microcracks of the materials.

In the same bell vegetable material in the form of flowers was immersed. These flowers were exposed to the same procedure as above. The climbing of the fluid was considerably slower with the flowers. It is probable that cell opening agents are needed as well as another viscosity for the fluids. At tests on vegetables in the form of tree (pine, fir) the climbing speed was considerably higher, and a total penetration was obtained relatively fast.

A device according to Fig 1, comprising a frame and a cloth, the frame having the dimensions 25 x 40 cm, was used for tests directly on surfaces with supply of coloured test fluids. The device was applied against the surface, and the frame was exposed to constant negative pressure for sealing and fixing of the working surface. Coloured test fluid was supplied to the working surface, and the whole surface was exposed to cyclic negative pressure in a series of 20 seconds with intervals of 5 seconds during about 25 cycles. After dismounting the equipment it could be observed that in the case of concrete K 200 penetration to a depth of 45 mm had occured, whereas in the case of for example Travertin the penetration was limited to about 4 mm; all microcracks to a great depth were filled. When the test equipment was used for bricks penetration occured very fast and deep.

"Drill cores" were tested in a tube shaped equipment with a diameter of 20 cm and a height of 50 cm. The same results as above were obtained very fast and deep. Also cores of concrete K 450 were tested.

The performed tests indicate that the following factors are of importance for the effect to penetrate and force out materials:
1. The viscosities of the media as well as the difference in viscosity between emigrating and immigrating media.
2. The densities and the difference in density between emigrating and immigrating media.
3. The differencies in expansion for the different media at negative and positive pressure.
4. The different reactions of the media for temperature differencies as well as temperature increases and decreases, respectively.
5. The course of the cycles with regard to
   a) the structure of the cycle series
   b) the length of the cycles
   c) the negative pressure of the cycles (between 1000 and 200 mbar)
   d) the flow during the cycles
   e) the time between the cycles.

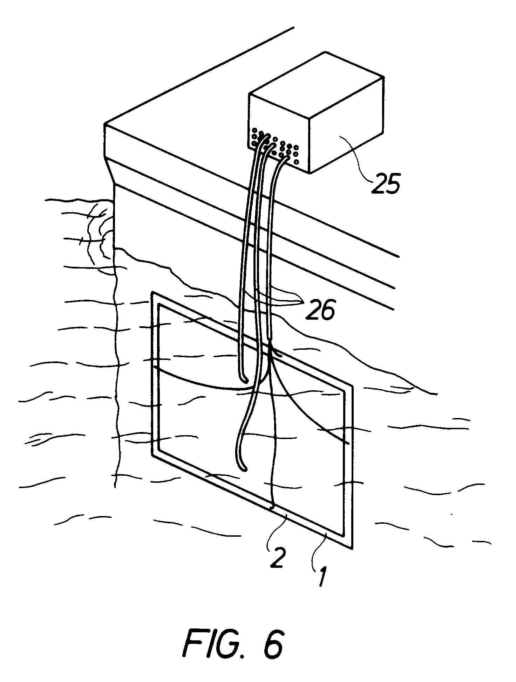

Fig 6 is intended to illustrate how the method and device according to the invention is used at repair of a quay under water. A valve center 25 is placed on the quay, and lines 26 for the continuous negative pressure to the frame 1, the cyclic negative pressure to the space under the cloth 2 and possibly further lines for treatment media extend from this center down to the device 1, 2 under water.

Summarizing, the invention relates to a method and a device for treating different materials, for example mineral materials, such as natural stone, plaster, bricks and so on, metals and biological materials. Examples of objects of mineral materials are facades, statues, portals, friezes, bases, museum artifacts and works of art. By means of the method measures can be taken either in a stationary equipment (after dismounting of the objects) or in mobile equipment in situ. By means of the method it is possible, independent of the included processes, to obtain a very large penetration depth without destroying the material, depending on the porosity of the material and the treatment media used. The objects can be treated under continuous supply of treatment medium used, and the process can be surveyed by means of computerized sensors. The method can be used independent of the form and structure as well as placement of the substrate. Renovation of plastered surfaces is possible, the existing plastered surfaces being attached against the substrate by means of recalcinating. The method can be used on such smooth surfaces as facades as well as on statues, friezes and so forth.

## Claims

1. A method of treating materials, such as mineral, metallic and biological materials, for carrying out for example moisture migration, polymerization, neutralizing, recalcinating, impregnating, pigmentation, preservation, reinforcement, cleaning, ionization, sanitation, leaching or soaking,
**characterized** in that the material is exposed
- at a temperature at or over the temperature of the surroundings - to a cyclically variating pressure, the maximum pressure of which is at or closely below the atmospheric pressure and the minimum pressure of which is down to about 200 mbar or lower.

2. A method according to claim 1,
**characterized** in that a treatment medium suitable for the treatment is supplied at the same time as the material is exposed to the cyclically variating pressure.

3. A method according to claim 1 or 2,
**characterized** in that the material if required is exposed to infrared light, ultraviolet light, microwaves or the like concurrently with the cyclically variating pressure.

4. A device for carrying out the method according to any of the claims 1 - 3, including an enclosure (2) for enclosing or covering an object or a part of an object which shall be treated, means (1) for sealingly delimit the enclosure from the surrounding, so that a pressure inside the enclosure can be maintained other than outside the same, and means for creating a cyclically variating pressure inside the enclosure,
**characterized** by an enclosed frame (1) for application against the part of the object which shall be treated and a cloth (2) or the like, which is attached to the frame and covers the space within the same, the frame being intended to be sucked against the object by means of a continuous subatmospheric pressure and the cloth being provided with connections (4) for the cyclically variating pressure and for suitable treatment media.

5. A device according to claim 4,
**characterized** by means for exposing a working surface inside the frame (1) to infrared light, ultraviolet light, microwaves or the like.

6. A device according to claim 4,
**characterized** by a pump (10) for creating a continuous subatmospheric pressure in a storage tank (11) connected to the frame (1), a cycling tank (13) connected to the storage tank and to the cloth (2), treatment media tanks (15 - 18) connected to the cloth, and an electronic system (24) for surveying and controlling the cyclically variating pressure and the supply of treatment media and so forth.

## Patentansprüche

1. Verfahren zum Behandeln von Materialien, wie Minerialien, metallische und biologische Materialien, um beispielsweise eine Feuchtigkeitsveränderung, eine Polymerisation, eine Neutralisierung, eine Rekalzination, eine Impregnation, eine Pigmentierung, eine Konservierung, eine Verstärkung, eine Reinigung, eine Ionisierung, eine Sanierung, eine Extraktion oder eine Wässerung vorzunehmen,
dadurch gekennzeichnet,
daß das Material bei einer Temperatur bei oder über der Temperatur der Umgebung einem sich zyklisch ändernden Druck ausgesetzt wird, wobei der maximale Druck bei oder nahe unter dem Atmosphärendruck und der minimale Druck bei etwa 200 mbar oder darunter liegt.

2. Verfahren nach Anspruch 1,
dadurch gekennzeichnet,
daß ein Behandlungsmedium, das für die Behandlung geeignet ist, zur gleichen Zeit zugeführt wird, während das Material dem sich zyklisch ändernden Druck ausgesetzt wird.

3. Verfahren nach Anspruch 1 oder 2,
dadurch gekennzeichnet,
daß das Material, falls erforderlich, Infrarotlicht, Ultraviolettlicht, Mikrowellen oder dgl. gleichzeitig mit dem sich zyklisch ändernden Druck ausgesetzt wird.

4. Vorrichtung zum Durchführen dem Verfahrens nach einem der Ansprüche 1 bis 3, umfassend
eine Umhüllung (2) zum Einschließen oder Abdecken eines Gegenstandes oder eines Teils eines Gegenstandes bzw. Objektes, das behandelt werden soll, eine Einrichtung (1) zum Abdichten der Umhüllung von der Umgebung, damit ein Druck innerhalb der Umhüllung aufrechterhalten werden kann, der anders ist als auf der Außenseite der Umhüllung, und eine Einrichtung zum Erzeugen eines sich zyklisch ändernden Drucks innerhalb der Umhüllung,
gekennzeichnet
durch einen umgebenden Rahmen (1) zum Anlegen gegen einen Teil des Gegenstandes oder Objektes, das behandelt werden soll, und eine Bahn bzw. ein Gewebe (2) oder dgl., das an dem Rahmen angebracht ist und den Raum innerhalb von diesem abdeckt, wobei der Rahmen gegen das Objekt mittels eines kontinuierlichen, unter Atmosphärendruck liegenden Druckes angesaugt wird und die Bahn mit Verbindungseinrichtungen (4) für den sich zyklisch ändernden Druck und für ein geeignetes Behandlungsmedium versehen ist.

5. Vorrichtung nach Anspruch 4,
gekennzeichnet
durch eine Einrichtung, mittels der eine Bearbeitungsfläche innerhalb des Rahmens (1) Infrarotlicht, ultraviolettem Licht, Mikrowellen oder dgl. ausgesetzt wird.

6. Vorrichtung nach Anspruch 4,
gekennzeichnet
durch eine Pumpe (10) zum Erzeugen eines kontinuierlichen, unterhalb des Atmosphärendrucks liegenden Drucks in einem Speichertank (11), der mit dem Rahmen (1) verbunden ist, einen Zyklustank (13), der an den Speichertank und an die Bahn (2) angeschlossen ist, Behälter (15-18) für Behandlungsmedium, die an die Bahn angeschlossen sind, und ein elektronisches System (24) zum Überwachen und Steuern des sich zyklisch ändernden Drucks und der Zuführung des Behandlungsmediums und dgl.

## Revendications

1. Procédé pour le traitement de matériaux, tels que des matériaux minéraux, des matériaux métalliques et des matériaux biologiques, afin de provoguer par exemple une migration de l'humidité une polymérisation, une neutralisation, une recalcination, une imprégnation, une pigmentation, une préservation, un renforcement, un nettoyage, une ionisation, une stérilisation, un lessivage ou une maturation,
caractérisé en ce que le matériau est exposé - à une température égale ou supérieure à la température de l'environnement - à une pression variant cycliquement, dont la valeur maximale est égale ou peu inférieure à la pression atmosphérique et la valeur minimale est égale ou inférieure à environ 200 mbars.

2. Procédé suivant la revendication 1, caractérisé en ce qu'un milieu de traitement convenable pour le traitement est fourni en même temps que l'exposition du matériau à la pression variant cycliquement.

3. Procédé suivant la revendication 1 ou 2, caractérisé en ce que le matériau, si cela est requis, est exposé à de la lumière infrarouge, de la lumière ultraviolette, des micro-ondes ou un agent similaire conjointement avec la pression variant cycliquement.

4. Dispositif pour la mise en oeuvre du procédé suivant l'une quelconque des revendications 1 à 3, comprenant une enceinte (2) pour entourer ou couvrir un objet ou une partie d'un objet qui doit être traité, un moyen (1) pour délimiter de manière hermétique l'enceinte par rapport à l'environnement, de telle sorte qu'une pression à l'intérieur de l'enceinte puisse être maintenue à une valeur autre que la pression à l'extérieur de cette enceinte, et un moyen pour engendrer une pression variant cycliquement à l'intérieur de l'enceinte,
caractérisé par la présence d'un cadre clos (1) pour l'application contre la partie de l'objet qui doit être traité et une étoffe (2) ou une matière similaire, qui est fixée au cadre et qui couvre l'espace délimité par ce cadre, le cadre étant destiné à être appliqué par aspiration contre l'objet au moyen d'une pression continue inférieure à la pression atmosphérique et l'étoffe étant munie de connexions (4) pour engendrer la pression variant cycliquement et pour fournir des milieux de traitement convenables.

5. Dispositif suivant la revendication 4, caractérisé par un moyen d'exposition d'une surface de travail à l'intérieur du cadre (1) à de la lumière infrarouge, de la lumière ultraviolette, des micro-ondes ou un agent similaire.

6. Dispositif suivant la revendication 4, caractérisé par une pompe (10) destinée à engendrer une pression continue inférieure à la pression atmosphérique dans un réservoir de stockage (11), connecté au cadre (1), un réservoir de recyclage (13) connecté au réservoir de stockage et à l'étoffe (2), des réservoirs de milieux de traitement (15, 18) connectés à l'étoffe, et un dispositif électronique (24) destiné à la surveillance et à la commande de la pression variant cycliquement et à l'apport de milieux de traitement et de milieux similaires.
